(19) Europäisches Patentamt

European Patent Office

Office européen des brevets

(11) Publication number: **0 425 188 A2**

## EUROPEAN PATENT APPLICATION

(21) Application number: **90311391.8**

(22) Date of filing: **17.10.90**

(51) Int. Cl.5: **G06F 7/00**

(30) Priority: **23.10.89 US 425782**

(43) Date of publication of application:
**02.05.91 Bulletin 91/18**

(84) Designated Contracting States:
**DE FR GB IT**

(71) Applicant: **International Business Machines Corporation**
**Old Orchard Road**
**Armonk, N.Y. 10504(US)**

(72) Inventor: **Lawless, John Joseph**
**5 Willets Drive West**
**Red Hook, New York 12571(US)**

(74) Representative: **Harris, Ian Richard**
**IBM United Kingdom Limited Intellectual**
**Property Department Hursley Park**
**Winchester, Hants. SO21 2JN(GB)**

(54) Stack design for processor.

(57) Items (eg. graphic orders) are written into the stack area of system memory of a processor (eg. a graphics processor) beginning at the limit pointer at the highest memory address in the stack area, so that the stack is formed in a descending direction toward the initial pointer at the lowest memory address in the stack area. In response to a pop order, the orders are read from the stack area in an ascending direction from the current pointer and are executed in sequence until a stack marker or branch order is encountered. To accomplish this reading and execution at a high speed, a prefetching buffer used to accelerate the processing of graphic orders stored elsewhere in the system memory is redirected to the top of the stack to load the contents into the buffer. To maintain compatibility with the previous design in which the stack was formed upwardly from the initial pointer, an appropriate conversion is made for any data transfer between the current pointer register and a user-accessible location.

FIG.1

EP 0 425 188 A2

## STACK DESIGN FOR PROCESSOR

This invention relates to a method and apparatus for controlling the movement of items to and from a stack. The invention finds particular but not exclusive application for controlling the movement of graphic orders to and from the stack area of system memory in a graphics processor.

In a graphics processor, such as that of the IBM 5080 Graphics System, it is sometimes necessary to move instructions known as graphic orders to and from a stack area defined in system memory. This is done to save information relative to the state of the graphics processor, as well as to accommodate subroutine calls. In the stack system used heretofore in that graphics processor, a graphic order is "pushed" (i.e., written) onto the system memory stack by storing it in the contiguous memory location immediately above (i.e., having a higher memory address than) the current top of the stack as indicated by a current pointer. The order is followed by a delimiter and a count word indicating the length of the order, and the stack pointer is incremented by an amount equal to the combined length of the order, delimiter and count word.

In the graphics processor containing the stack, the desired sequence of execution of the orders contained in the stack is from the order most recently stored in the stack to the order least recently stored in the stack -- that is, a LIFO sequence. Thus, orders from the stack must be executed beginning with the order contained at the highest memory location in the stack. Orders contained in other storage locations, on the other hand, are stored in their normal order of execution (i.e., with the orders to be executed first at the lowest memory addresses), and contiguously with one another rather that being separated by count words or delimiters as in the stack area. Therefore, a substantial portion of the time required for processing orders from the stack area is devoted to sequencing or testing (to determine whether the orders originate from the stack area or from an area in which they are stored in the normal order), rather than actually executing the orders. As a consequence, an additional, higher-speed stack area is required to obtain reasonable processing speed for the graphics processor as a whole.

An object of the invention is therefore to provide a stack which mitigates these deficiencies of the prior system.

In accordance with a first aspect of the invention, there is provided apparatus for controlling the movement of items to and from a stack area in a memory comprising means for storing a current pointer indicating the current top of a stack in said stack area, means responsive to a push order for writing an item into said stack area at a memory location having a lower address than that of the current top of the stack and for decrementing said stack pointer, and means responsive to a pop order for reading from said stack area the item at the current top of said stack and for incrementing said current pointer.

The invention also provides a graphics processor comprising such apparatus.

In accordance with a second aspect of the invention, there is provided a method of controlling the movement of items to and from a stack area in a memory, said method including the steps of storing a current pointer indicating the current top of a stack in said stack area, writing an item into said stack area at a memory location having a lower address than that of the current top of the stack and decrementing said stack pointer in response to a push order, and reading from said stack area the item at the current top of said stack and incrementing said current pointer in response to a pop order.

An example of the present invention is described hereinafter with reference to the accompanying drawings, in which:

Fig. 1 is a schematic block diagram of a graphics system incorporating apparatus in accordance with the present invention,.

Fig. 2 is a diagram showing the generic format of a graphic order;

Fig. 3 is a schematic block diagram of the stack registers of the system shown in Fig. 1;

Fig. 4 is a schematic block diagram of the stack area of system memory in a system of the prior art;

Fig. 5 is a schematic block diagram of the stack area of system memory in a system incorporating the present invention;

Fig. 6 is a flowchart illustrating the placement of an item in the stack of the present invention in response to a push order;

Fig. 7 is a flowchart illustrating the reading of items from the stack of the present invention in response to a pop order;

Fig. 8 is a flowchart illustrating the loading of the stack registers of the present invention; and

Fig. 9 is a flowchart illustrating the storing of the contents of the stack registers of the present invention.

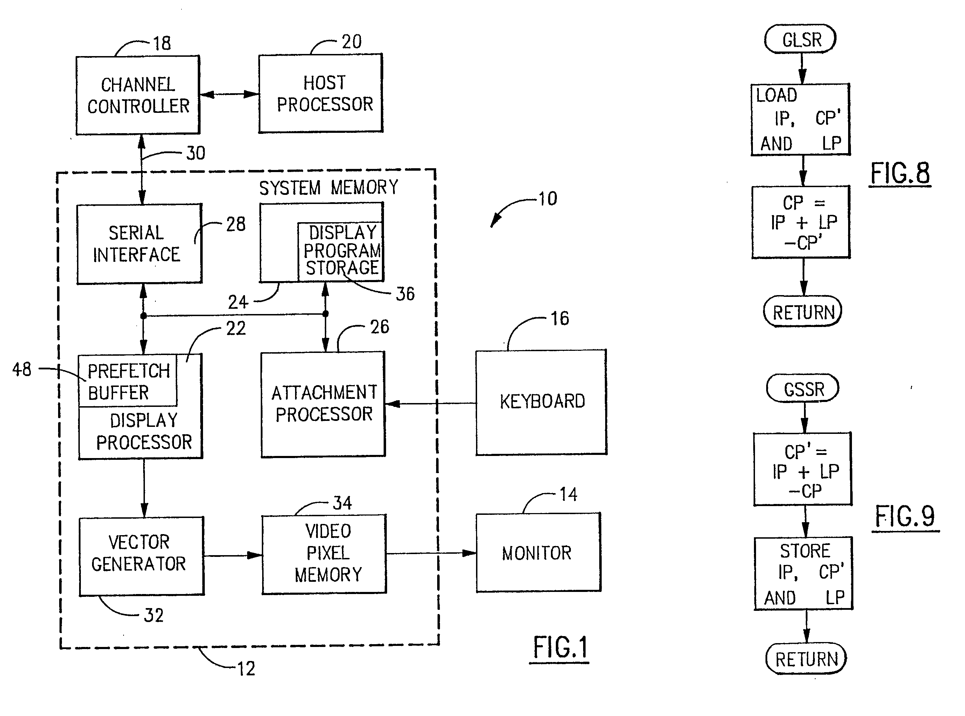

Referring to Fig. 1, a graphics system 10 incorporating the stack design of the present invention includes a graphics processor 12, a display monitor 14 and one or more peripheral devices such as an alphanumeric keyboard 16 coupled to the graphics processor 12, and a graphics channel controller 18 coupling graphics processor 12 to a host processor 20. Graphics processor 12 includes a display processor 22, a system memory 24, preferably a random-access memory (RAM), and an attachment processor 26. Processors 22 and 26 and memory 24 are coupled to one another as shown in Fig. 1, as well as to channel controller 18 by means of a serial interface processor 28. A high-speed serial link 30 couples serial interface processor 28 to channel controller 18.

Attachment processor 26 couples peripheral devices such as the keyboard 16 shown to the other components of the graphics processor 12. A vector generator 32 coupled to display processor 22 generates raster graphics images, which are stored in a pixel memory 34 coupled to monitor 14.

A portion of the system memory 24 is allocated for use as display program storage 36. Display processor 22 executes a display program, consisting of graphic orders interleaved with data, which resides in display program storage 36. Preferably, the execution speed for graphics orders is enhanced by prefetching contiguous blocks of graphic orders to be processed and storing them in a high-speed FIFO buffer area 48 associated with the display processor 22. An application program in host processor 20 generates the display program, loads the display program into display program storage 36 in system memory 24, and begins execution of the display program. Typically, several graphics processors 12 are coupled to a single channel controller 18 coupled to host processor 20, each processor and associated peripherals functioning as a separate workstation.

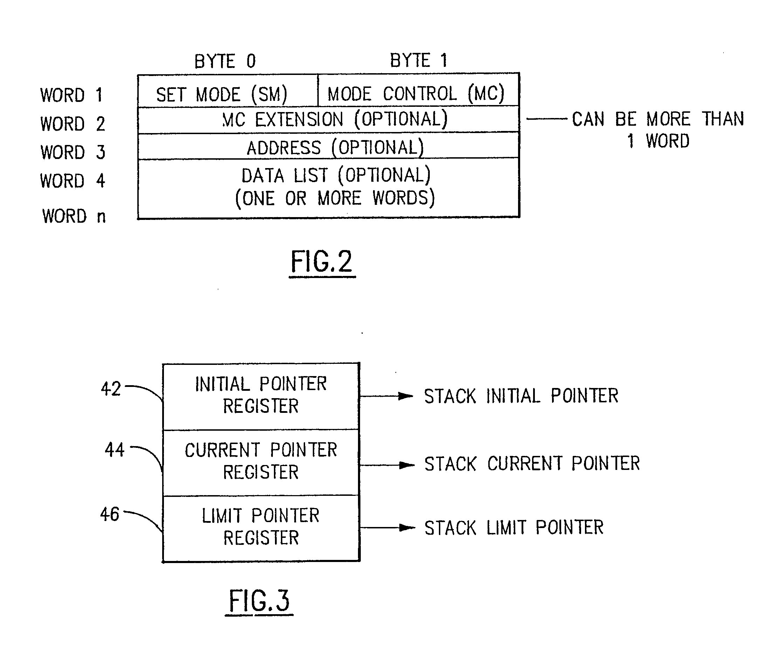

Graphic orders constituting the display program of the system 10 have the generic format shown in Fig. 2. As shown in the figure, the first word of each order is a set mode (SM) byte, which can have the value $X'28'$, $X'2A'$, $X'2C'$ or $X'2E'$, followed by a mode control (MC) byte, which has a value defining the specific operation required. The first portion of the SM byte functions as a delimiter, identifying the beginning of a new order and thus the potential end of a preceding data list; the second portion of the SM byte specifies the addressing mode of the address words and data words. Some orders have, following the first word, a second word, or string of words that extend the MC byte. This extension (if present), called the MC extension, provides increased function control beyond that of the MC byte.

Following the order proper, which may be one to three words in length (SM, MC and optional MC extension), can be an address word. The address word can contain an absolute or relative address. Finally, the order may have one or more data words comprising a data list. A data list contains additional parameters required by the order,

For character mode and graphics mode orders that are followed by zero or more data fields forming a variable-length immediate data list, the next order to be executed is precisely that order terminating the data list. The next order to be executed following a control mode order is determined by sequentially scanning each word that follows for an order (SM code in the first byte). The search start location is either the byte following the last byte of the current order (including its data field) or, in the case of a branch order for which the conditions necessary for the transfer are satisfied, the target location specified in the branch order.

Further details regarding the graphic orders may be found in the guide entitled IBM 5080 Graphics System: Principles of Operation, 5085 Model 2 (GA23-2012-0), the contents of which are incorporated herein by reference.

Stack control orders are used in the system 10 to save information relative to the state of the graphics processor 12 and to accommodate subroutine calls. Thus, as a particular example, stack control orders may be used immediately before and after executing a nested segment to save and restore state information used in the base segment. To save the correct states, the stack orders are placed as shown in Table 1 below:

3

TABLE 1

| GBGSEG | Start base segment |
|---|---|
| GPSMC | Push stack marker |
| GPTM | Push transformation matrix to stack |
| GPATR | Push attribute registers to stack |
| GBGSEG | Start nested segment |
| . | |
| . | |
| . | |
| GESEG | End nested segment |
| GPOP | Retrieve base segment attributes from stack |
| . | |
| . | |
| GESEG | End base segment |

Execution of the stack control orders in Table 1 results in the formation of the stack shown in Table 2:

TABLE 2

| GLATR | Load attribute registers |
|---|---|
| GLTM | Load transformation matrix |
| 2AB0 | Stack marker code |
| | (Items further down on stack) |
| . | |
| . | |

In Table 2 items on the top of the stack, i.e. the stack end from which items are accessed, are shown at the top of the page, regardless of whether their memory address is higher or lower than that of other items in the stack. Also, each order, which may with its data list comprise several words, is shown on a single line to simplify the discussion.

Execution of the GPSMC order in Table 1 causes a stack marker ($X'2AB0'$) to be placed at the top of the existing stack to provide a stop code for a subsequently executed pop order. Execution of the GPTM and GPATR orders thereafter causes GLTM arid GLATR orders to be placed successively on the top of the stack is shown In Table 2. These orders, when subsequently executed during the pop operation, restore the contents of the transformation matrix and attribute registers, respectively, of the base segment.

Upon subsequently encountering the GPOP order in the base segment after leaving the nested segment of Table 1, the items pushed onto the stack of Table 2 are read from the top of the stack until either a stack marker (as in this example) or a GBPAGE (branch page) order is encountered. At the conclusion the stack is left in the condition it was previously, with the stack marker and the GLATR and GLTM orders removed.

Another use of the stack is to accommodate subroutine calls. The calling routine may contain a listing as shown in Table 3:

TABLE 3

| . | |
|---|---|
| . | |
| GBAPL | Branch to subroutine; push link onto stack |
| Gnext | Next order in calling routine |
| . | |
| . | |

The subroutine itself may contain the following listing:

TABLE 4

| Gsubr | First order of subroutine |
|---|---|
| . . . | - |
| GPOP | Pop link from stack; return to calling routine |

The GBAPL order of the calling routine (Table 3) is executed by (1) placing a GBPAGE order in the stack, specifying a branch to the address of the next order (Gnext) in the calling routine, and (2) branching to the address of the first order (Gsubr) in the subroutine. The final order (GPOP) of the subroutine is executed by popping the GBPAGE order placed on top of the stack by the calling routine and executing it. This effects a branch back to the next address (Gnext) of the calling routine, as was desired.

If the subroutine is one that may alter state information such as the contents of the attribute registers or the transformation matrix, the previous state information may be saved by placing appropriate push orders (GPATR, GPTM, etc.) at an early location in the subroutine. These orders are executed, as in the example of Tables 1 and 2, by pushing appropriate load orders (GLATR, GLTM, etc.) onto the stack, on top of the GBPAGE order placed there by the calling routine. If this is done, then subsequent execution of the GPOP order at the end of the subroutine will cause the load orders (GLATR, GLTM, etc.) to be read from the stack and executed before branching back to Gnext (and ending the pop operation) upon encountering the GBPAGE order.

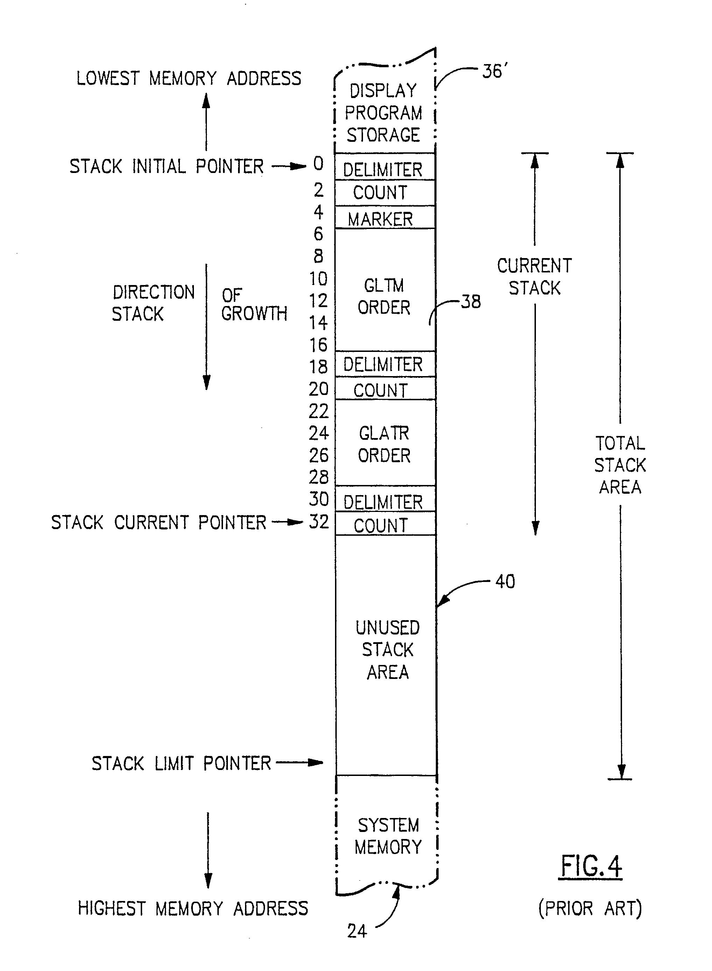

Fig. 4 shows the stack design of the previous graphics system, referred to in the background portion above, in which orders are added to the stack 38' beneath the current stack pointer, in the direction of ascending memory addresses. The stack area 40' in the display program storage 36' of the system memory 24' of the previous system (primed reference numbers refer to components of the previous system) is defined by a Stack Initial Pointer (IP), which points to the lowest word address in the stack area 40', and a Stack Limit Pointer (LP), which points to the highest word address in the stack area 40'. A Stack Current Pointer (CP) indicates the top of the current stack 38' in the area 40', which is the highest word address of the stack shown in Fig. 2. Each word consists of two 8-bit bytes; the addresses are reckoned in bytes so that the addresses of contiguous words differ by 2.

The initial pointer, current pointer and limit pointer of the previous system, as well as those of the present invention, are stored in a set of stack registers (Fig. 3) associated with the display processor 22. These stack registers include an Initial Pointer Register 42 for storing the Stack Initial Pointer, a Current Pointer Register 44 for storing the Stack Current Pointer, and a Limit Pointer Register 46 for storing the Stack Limit Pointer. Although not shown in Fig. 3, there is also a register for storing the Stack Location Page Number, which indicates the page in system memory 24 containing the stack area. Each of registers 42-46 is implemented as two separate 8-bit register portions in the system 10, one register portion for the high byte and the other register portion for the low byte. However, to simplify the discussion, each of these pairs of register portions will be referred to as though it constituted a single 16-bit register. The stack registers 42-46 are initialized when the system 10 is started in response to a GLSR (Load Stack Register) order, as will be described in more detail below.

The operation of the stack design of the previous system will now be described with reference to Tables 1 and 2 and Fig. 4. Initially, a X'2AFE' delimiter followed by a X'0000' count is placed at the bottom (lowest memory address in this instance) of the stack 38'. In response to the GPSMC order in the program listing of Table 1, a stack marker (X'2AB0') is added to the top of the stack 38' and the current pointer is incremented by 2 to point to the new top of the stack.

In response to the succeeding GPTM order, the system pushes onto the stack 38' a Load Transformation Matrix (GLTM) order, which, in the example shown in Fig. 4., is 6 words long and includes an MC extension and a data list. After the GLTM order, as after any order that is pushed onto the stack 38', the system adds a X'2AFE' delimiter, followed by a count word indicating the length (in this case 12, or X'000C', bytes) of the order, including any data list. The system then increments the current pointer by 16 (the combined byte count of the order together with the X'2AFE' delimiter and count word) to point to the new top of the stack 38'.

In response to the succeeding GPATR order, the system pushes a GLATR order, including its own data list, onto the top of the stack 38'. This saves the contents of the attribute registers for later use when the GLATR order is popped from the stack 38'. The system then pushes onto the stack 38' another X'2AFE' delimiter, followed by a word containing the byte count (in this case 8) of the GLATR order. The current pointer is incremented by 12 (8 order bytes + 2 delimiter bytes + 2 count bytes) to point to the new top of the stack 38'.

Upon subsequently encountering the GPOP order in the program portion listed in Table 1, the prior system proceeds to read the orders from the stack 38' in the following manner. The system first gets the count stored at the word location indicated by the current pointer. The system then branches back to the stack location corresponding to CP -(count + 2), where CP is the value of the current pointer, to point to the first graphic order (GLATR in this instance) to be popped from the top of the stack. The system then executes the order in the normal manner, after which it ascertains whether the order originated from the stack 38' (where orders are arranged in a sequence opposite to that of their execution) or from some other part of system storage (where orders are arranged in the sequence of their execution). If, as in this example, the former is the case, the system branches back to CP - (count + 4) to point to the count value for the next order.

The system then proceeds in a similar manner to process the next order, and continues until it encounters either a stack marker, as in this example, or a GBPAGE order. Upon encountering a stack marker, the system branches back to the order following the GPOP order in Table 1. As will appreciated from the foregoing description, the execution of the GPOP order is complicated, as it entails repeated testing to determine the origin of the order being executed and branching to accomplish proper sequencing of the orders. For this reason, in the previous stack design, stack items were initially pushed into a high-speed stack area, with the stack area 38' defined in the display program storage 36' of system memory 24' being used as a secondary stack area in case the high-speed area overflowed. Such a high-speed stack area was inherently wasteful of system resources, however, since it was used only for stacking purposes.

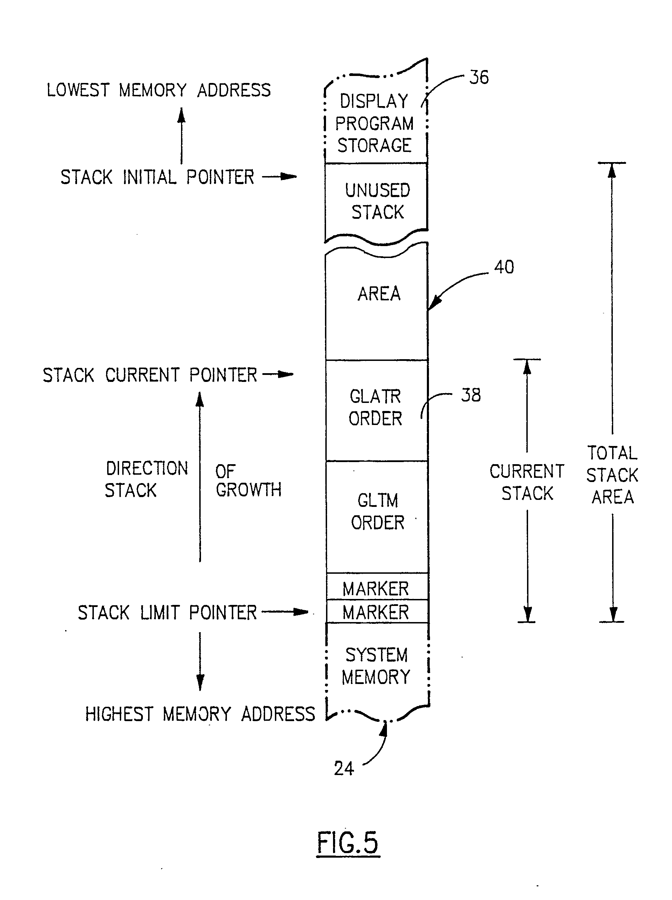

Referring now to Fig. 5, in the stack design of the present invention, orders are added to the stack end having the lowest memory address, as indicated by the current pointer, so that the stack 38 is formed in the direction of the initial pointer. The contents of each individual order, however, are arranged in the same sequence as in the previous stack design, shown in Fig. 4. As a result, on a subsequent pop operation, orders may be processed in a manner similar to that in which they are processed from elsewhere in system memory.

When the stack area 40 is initially defined in system memory 24 in response to a GLSR (Load Stack Register) order, the current pointer CP is set equal to the limit pointer LP unless some other value for CP is expressly defined in the order. In addition, a stack marker (X'2AB0') is loaded into the word location indicated by the current pointer.

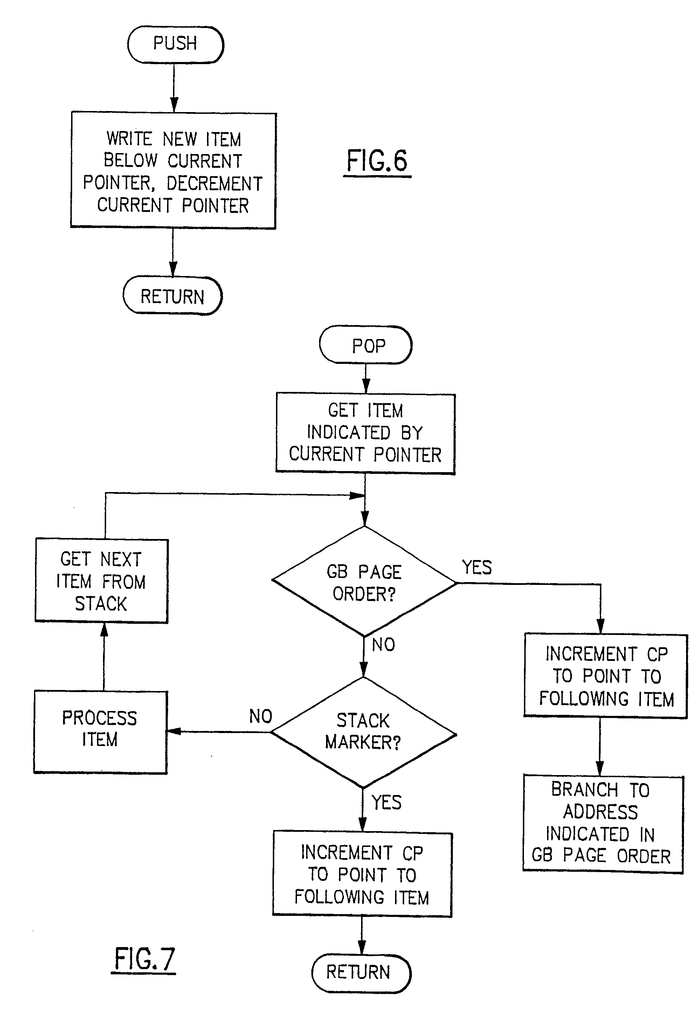

Fig. 6 illustrates the manner of execution of a push order in the stack design of the present invention. In a graphics system using the 5080 graphic orders referred to above, these include GPSMC (Push Stack Marker Code), GBAPL (Branch After Push Link), GPATR (Push Attribute Register), and GPTM (Push Transformation Matrix), as well as others described in IBM 5080 Graphics System: Principles of Operation, 5085 Model 2 . Initially, the current pointer points to the word position in the stack 38 having the lowest memory address, as shown in Fig. 5; memory locations in the stack area 40 having lower memory addresses constitute unused portions of the stack area. In response to the push order, the system writes the order or stack marker indicated by the push order into the memory location immediately below (i.e., having a lower address than) the current "top" of the stack 38 as indicated by the current pointer, and decrements the current pointer register 44 to point to the lowest word location of the newly added item. The system then proceeds to execute the next order after the push order that was just executed. Typically, as shown in Table 1, the display program will contain several push orders in immediate succession, which will be executed consecutively,

Preferably, each pushed order is written into the stack area 40 beginning with the highest word address of the unused stack area and proceeding on down through that area so that the current pointer register 44 is decremented automatically, word by word, in the course of the write operation. If the writing is done in this manner, the system starts with the words of the pushed order having the highest relative address. Thus, while the sequence of the orders written into the stack area 40 is opposite that of the previous system, the relative sequence of the individual parts of each order is the same. Therefore, a order stored in the new stack area 40 will, like an order stored in the old stack area 40', contain an SM byte followed by an MC byte at the lowest memory address, followed optionally by an MC extension, an address word and a data list in that sequence, with the data list, if present, being located at the highest word addresses of the order.

Fig. 7 shows the manner of execution of a pop order in the stack design of the present invention. In response to the pop order, the system reads the order stored at the stack location indicated by the current pointer register 44 and executes it in the normal manner (or simply discards the order if the pop order is a POPNOP order). If, as suggested above, a high-speed prefetching buffer is used to increase the effective processing speed, the buffer is redirected to the top of the stack 38, and the contents of the stack are

EP 0 425 188 A2

loaded into the buffer.

The system continues to read orders from the stack 38 (or corresponding location in the prefetching buffer, if one is used) and executes or discards them, in the direction of ascending memory addresses, until it encounters either a stack marker (X'2AB0') or a GBPAGE order. If the item encountered is a stack marker, the system increments the current pointer to point to the next stack item and then proceeds to execute the item following the pop order. If the item is a GBPAGE order, the system increments the current pointer to point to the next stack item and then branches to the page and address indicated in the GBPAGE order. At the end of the pop operation, the current pointer register 44 points to the new top of the stack 38, from which the processed items have been removed.

Since, in the stack design of the present invention, orders are arranged in the stack 38 in the same manner as they are elsewhere in display program storage 36, special sequencing and testing operations are minimized. The high-speed prefetching buffer used for orders originating elsewhere in display program storage 36 may thus be used to accelerate stack-popping operations as well, eliminating the need for a special high-speed stack area.

In the system containing the previous stack design, certain graphic orders wrote to or read from the stack registers, including the current pointer register. Since the previous system formed the stack upwardly from the initial pointer, whereas the system of the present design forms the stack downwardly from the limit pointer, certain incompatibilities might result if this difference in operation were not taken into account when implementing the stack register load (GLSR) and store (GSSR) orders. More particularly, whereas in the previous design a current pointer equal to the initial pointer or limit pointer indicated an empty stack or full stack, respectively, exactly the opposite is the case in the present design.

To eliminate this possible source of incompatibility, a conversion is made between the value in the current pointer register 44 and the value in the storage location accessible to the application so that the actual arrangement of the stack 38 is transparent to programming. Thus, as shown in Fig. 8, when executing a GLSR (Load Stack Register) order specifying a current pointer value CP', that pointer value is converted to a register pointer value CP in accordance with the transformation

$$CP = IP + LP - CP',$$

where IP and LP are the initial and limit pointer values, respectively, so that the difference between the limit pointer value LP and the current pointer value CP actually loaded into the current pointer register is the same as the difference between the specified current pointer value CP' and the initial pointer value IP.

Similarly, as shown in Fig. 9, when executing a GSSR (Store Stack Register) order, the current pointer value CP actually stored in the current pointer register 44 is converted to a value CP' stored in the user-accessible location specified by the order in accordance with the transformation

$$CP' = IP + LP - CP,$$

where IP and LP are defined as above, so that the difference between the current pointer value CP' stored in the user-accessible location and the initial pointer value IP is the same as the difference between the limit pointer value LP and the current pointer value actually stored in the current pointer register.

Thus, read or write operations involving the current pointer register 44 perform a reflection of the current pointer value about the midpoint of the stack area 40 so that to the user the area appears to be filling from the lower memory addresses as in the previous design. The actual operation of the stack is thus transparent to normal applications, and compatibility with the existing graphic order set of the 5080 Graphics System is preserved in the new design.

There has been described, a method and apparatus for controlling the movement of items to and from a stack area in a memory, such as the system memory of a graphics processor, in which a stored current pointer indicates the current top of the stack in the stack area. (As used herein, the "top" of the stack is the stack end where items are added or removed, and the "bottom" end is the other end, without regard to which end is at the higher or lower memory location in the stack.) In response to a "push" order, an item such as a graphic order is written into the stack area at a memory location having a lower memory address than that of the current top of the stack, and the stack pointer decremented in accordance with the length of the newly added item. In response to a "pop" (i.e., read) order, the item at the current top of the stack is read from the stack area and the stack pointer incremented in accordance with the length of the item to signify its removal from the stack.

In the stack described in the preceding paragraph, the items, if orders or other instructions, are stored in the stack in their normal order of execution -- that is, with the items first to be executed stored at the lower memory locations and the items last to be executed at the higher memory locations. Accordingly, the stack items may be executed in a manner similar to identical to that of items contained in in other storage areas, without the necessity of sequencing, testing or other special operations. As a result, the effective processing rate for items in the stack is significantly increased.

7

Although the stack design of the present invention has particular utility in a graphics processor, it may be used in other environments as well. Further, although the pointers described herein point to locations in the stack or stack area itself, the pointers could point to an adjacent location on the other side of the interface in question. Thus, the current pointer could point to the highest memory address outside the current stack rather than to the lowest memory address inside the stack as in the example shown.

While the invention has been particularly shown and described with reference to preferred embodiments thereof, it will be understood by those skilled in the art that various changes in form and details may be made therein without departing from the scope of the invention.

## Claims

1. Apparatus for controlling the movement of items to and from a stack area in a memory comprising means for storing a current pointer indicating the current top of a stack in said stack area, means responsive to a push order for writing an item into said stack area at a memory location having a lower address than that of the current top of the stack and for decrementing said stack pointer, and means responsive to a pop order for reading from said stack area the item at the current top of said stack and for incrementing said current pointer.

2. Apparatus as claimed in Claim 1 in which said items are variable-length items, said current pointer being decremented or incremented in accordance with the length of said item.

3. Apparatus as claimed in Claim 1 or Claim 2 including means for storing an initial pointer indicating the lowest memory address of said stack area and means for storing a limit pointer indicating the highest memory address of said stack area.

4. Apparatus as claimed in Claim 3 including means for initially setting said current pointer equal to said limit pointer.

5. Apparatus as claimed in Claim 3 or Claim 4 including means for initially storing a stack marker at the memory address indicated by said limit pointer.

6. Apparatus as claimed in any preceding claim in which the means for storing pointers comprise stack registers.

7. Apparatus as claimed in Claim 6 including means for loading said stack registers with specified stack pointers, said loading means including means for converting a specified current pointer value to a pointer value loaded into the current pointer register, the difference between the limit pointer value and said loaded current pointer value being equal to the difference between said specified current pointer value and the initial pointer value.

8. Apparatus as claimed in Claim 6 including means for storing the contents of said stack registers at specified locations, said storing means including means for converting the current pointer value held in said current pointer register to a current pointer value stored at said location, the difference between said stored current pointer value and the initial pointer value being equal to the difference between the limit pointer value and said held current pointer value.

9. Apparatus as claimed in any preceding Claim in which said items are executable orders, said reading means being responsive to said pop order to repeatedly read said orders from the top of the stack.

10. Apparatus as claimed in Claim 9 in which said reading means terminates said riding operation upon encountering a predetermined type of item in said stack.

11. Apparatus as claimed in Claim 9 or Claim 10 in which orders are stored in a portion of said memory outside said stack area and are transferred to a higher-speed storage area prior to execution, said reading means transferring contents of said stack to said higher-speed storage area in response to a pop order.

12. A graphics processor including apparatus as in any preceding Claim.

13. A method of controlling the movement of items to and from a stack area in a memory, said method including the steps of storing a current pointer indicating the current top of a stack in said stack area, writing an item into said stack area at a memory location having a lower address than that of the current top of the stack and decrementing said stack pointer in response to a push order, and reading from said stack area the item at the current top of said stack and incrementing said current pointer in response to a Pop order.

14. A method as claimed in Claim 13 in which said items are variable-length items, said current pointer being decremented or incremented in accordance with the length of said item.

15. A method as claimed in Claim 13 or Claim 14 including the steps of storing an initial pointer indicating the lowest memory address of said stack area and storing a limit pointer indicating the highest memory address of said stack area.

16. A method as claimed in Claim 15 including the step of initially setting said current pointer equal to said limit pointer.

17. A method as claimed in Claim 15 or Claim 16 including the step of initially storing a stack marker at the memory address indicated by said limit pointer.

18. A method as claimed in any one of Claims 13 to 17 in which the pointers are stored in stack registers.

19. A method as claimed in Claim 18 including the step of loading said stack registers with specified stack pointers, said loading step including the step of converting a specified current pointer value to a pointer value loaded into the current pointer register, the difference between the limit pointer value and said loaded current pointer value being equal to the difference between said specified current pointer value and the initial pointer value.

20. A method as claimed in Claim 18 including the step of storing the contents of said stack registers at specified locations, said storing step including the step of converting the current pointer value held in said current pointer register to a current pointer value stored at said location, the difference between said stored current pointer value and the initial pointer value being equal to the difference between the limit pointer value and said held current pointer value.

21. A method as claimed in any one of Claims 13 to 20 in which said items are executable orders, said reading step being performed by repeatedly reading said orders from the top of the stack.

22. A method as claimed in Claim 21 in which said reading step is terminated upon encountering a predetermined type of item in said stack.

23. A method as claimed in Claim 21 in which orders are stored in a portion of said memory outside said stack area and are transferred to a higher-speed storage area prior to execution, said reading step including the step of transferring contents of said stack to said higher-speed storage area in response to a pop order.

FIG.1

FIG.8

FIG.9

EP 0 425 188 A2

EP 0 425 188 A2

BYTE 0        BYTE 1

| | | |
|---|---|---|
| WORD 1 | SET MODE (SM) | MODE CONTROL (MC) |
| WORD 2 | MC EXTENSION (OPTIONAL) | |
| WORD 3 | ADDRESS (OPTIONAL) | |
| WORD 4 | DATA LIST (OPTIONAL) (ONE OR MORE WORDS) | |
| WORD n | | |

—— CAN BE MORE THAN 1 WORD

## FIG.2

42 —— INITIAL POINTER REGISTER    ➤ STACK INITIAL POINTER

44 —— CURRENT POINTER REGISTER    ➤ STACK CURRENT POINTER

46 —— LIMIT POINTER REGISTER    ➤ STACK LIMIT POINTER

## FIG.3

LOWEST MEMORY ADDRESS

STACK INITIAL POINTER → 0

DIRECTION STACK — OF GROWTH

STACK CURRENT POINTER → 32

STACK LIMIT POINTER →

HIGHEST MEMORY ADDRESS

— 36'

DISPLAY PROGRAM STORAGE

| | |
|---|---|
| 0 | DELIMITER |
| 2 | COUNT |
| 4 | MARKER |
| 6 | |
| 8 | |
| 10 | GLTM |
| 12 | ORDER |
| 14 | |
| 16 | |
| 18 | DELIMITER |
| 20 | COUNT |
| 22 | |
| 24 | GLATR |
| 26 | ORDER |
| 28 | |
| 30 | DELIMITER |
| 32 | COUNT |

— 38

UNUSED STACK AREA

— 40

SYSTEM MEMORY

24

CURRENT STACK

TOTAL STACK AREA

FIG.4

(PRIOR ART)

FIG.5

PUSH

WRITE NEW ITEM
BELOW CURRENT
POINTER, DECREMENT
CURRENT POINTER

RETURN

FIG.6

POP

GET ITEM
INDICATED BY
CURRENT POINTER

GET NEXT
ITEM FROM
STACK

GB PAGE
ORDER?

YES

NO

INCREMENT CP
TO POINT TO
FOLLOWING ITEM

PROCESS
ITEM

NO

STACK
MARKER?

YES

BRANCH TO
ADDRESS
INDICATED IN
GB PAGE ORDER

INCREMENT CP
TO POINT TO
FOLLOWING ITEM

FIG.7

RETURN